# EUROPEAN PATENT APPLICATION

(11) **EP 0 535 520 A1**
(43) Date of publication of application: **07.04.1993**
(21) Application number: 92116241.8
(22) Date of filing: 23.09.1992
(51) Int. Cl.: B29C 51/12, B29C 51/04, F25D 19/00

(54) **Method for producing cabinets by plastic deformation of synthetic material sheets, and in particular refrigerator cabinets, provided with support members for lamps, thermostats or functional members in general which become secured to the cabinets during their forming, and the cabinets obtained in this manner**

(30) Priority: 30.09.1991 IT MI912592
(71) Applicant: WHIRLPOOL EUROPE B.V., NL-5507 SK Veldhoven (NL)
(72) Inventor: Giuliano, Rosi, c/o Whirlpool Italia s.r.l., I-21025 Comerio (VA) (IT)
(74) Representative: Melio, Jan Dirk

(57) **Abstract**

A method for producing cabinets and in particular refrigerator cabinets (R) by plastic deformation, over moulds, of synthetic material sheets (1) made plastic by heat action, in which a usual support member (21) for lamps, thermostats or a general functional member of the refrigerator is previously associated with the equipment which effects this deformation, the plastic deformation then being carried out such as to incorporate said member into the thus deformed sheet, with its resultant securing to the sheet, ie to the cabinet wall which this latter defines.

## Description

This invention relates to a plastic deformation method for producing cabinets and the like, in particular refrigerator cabinets, provided with support members for lamps, thermostats or functional members in general, said deformation being obtained by generating a pressure difference on opposing faces of synthetic material sheets made plastic by heat action. The invention also relates to the cabinets and the like, in particular refrigerator cabinets, obtained by the method.

Cabinets and in particular refrigerator cabinets have for some time been constructed by plastic deformation, this term signifying both vacuum forming and deformation obtained by the effect of a higher than atmospheric pressure acting on one face of the sheet while atmospheric pressure acts on the opposing face.

A previous patent application in the name of the present applicant relates to a method for producing cabinets, in particular refrigerators, by vacuum forming in several stages, each of which concerns different regions of an initial sheet of formable synthetic material (such as polystyrene, polymethylstyrene or the like), these stages being separated by idle periods. The said method described in this previous patent application of the present applicant comprises:
a) heating the sheet of formable synthetic material;
b) raising the mould positioned below the sheet to hence stretch the lateral part of the sheet so that its central part deforms upwards by an amount equal to about one half of the height of the mould;
c) allowing the mould to remain in the final position of stage b) for a certain period;
d) lowering a die, positioned above the sheet, to hence stretch substantially only its central part so that this central part deforms downwards by an amount equal to about one half of the height of the mould;
e) allowing the die to remain in the final position of stage d) for a certain period;
f) completing the descent of the die into the mould, to hence further stretch the central part of the sheet and complete the forming of the sheet in known manner by the action of vacuum, which causes the sheet to adhere completely to the mould;
g) returning to the initial position (stage a) and extracting the finished product.

In a refrigerator cabinet obtained for example in the aforesaid manner, the support members for lamps, thermostats or general functional members of the refrigerator which have to be secured to the cabinet are fixed to this latter after forming the cabinet or after forming the parts connected to it (door liner and rear panel).

The fixing is generally done manually and, as stated, only after the cabinet has been formed.

This results in various drawbacks, such as a lengthy refrigerator construction time (upright refrigerator, chest refrigerator or the like) and a consequent increase in its production cost, or the possibility that the fixing of the functional members to the overall refrigerator cabinet can damage its thermal insulation.

An object of the present invention is to provide a method for producing cabinets, in particular refrigerator cabinets, formed by plastic deformation of formable synthetic material sheets effected by generating a pressure difference between the opposing faces of said sheets, in which at least one functional member of the refrigerator such as a support member for a lamp, thermostat or the like is directly secured during the forming.

A further object is to provide a method of the aforesaid type which is of simple implementation and is achieved using known forming equipment.

A further object is to provide a method which achieves a secure and reliable connection between the functional member and the refrigerator cabinet.

A further object is to provide a method which achieves this connection while reducing human intervention to a minimum, with consequent reduction in the construction time and cost of the refrigerator cabinet.

A further object is to provide a method which can be implemented using materials usually used in forming refrigerator cabinets.

A further object is to provide a refrigerator cabinet of lower production time and cost than known cabinets and having at least one functional member of the refrigerator incorporated into the cabinet, this allowing the number of projecting elements to be reduced and enabling any element to be easily incorporated into the cabinet, in particular the electrical connections, which could be affected by the frost and moisture present in the refrigeration compartment.

These and further objects which will be apparent to the expert of the art are attained by a method for forming cabinets and in particular refrigerator cabinets by plastic deformation, over moulds, of synthetic material sheets made plastic by heat action, the deformation being achieved by generating a pressure difference between the opposing faces of said sheets, characterised in that a usual support member for lamps, thermostats or a general functional member of the refrigerator is previously associated with at least one part of the usual equipment which effects this forming, the forming then being carried out such as to incorporate said member into the thus formed sheet, with its resultant securing to the sheet, ie to the cabinet wall which this latter defines.

The objects of the invention are also attained by a refrigerator cabinet obtained by the aforesaid method, characterised by comprising, incorporated into at least one wall which defines it, at least one functional member of the refrigerator such as a support member for lamps, thermostat or the like.

The present invention will be more apparent from the accompanying drawing, which is provided by way of non-limiting example and in which:
Figure 1 is a vertical section through a domestic refrigerator cabinet constructed in accordance with the invention;
Figure 2 is a schematic representation, in its initial position, of equipment for implementing the method of the invention;

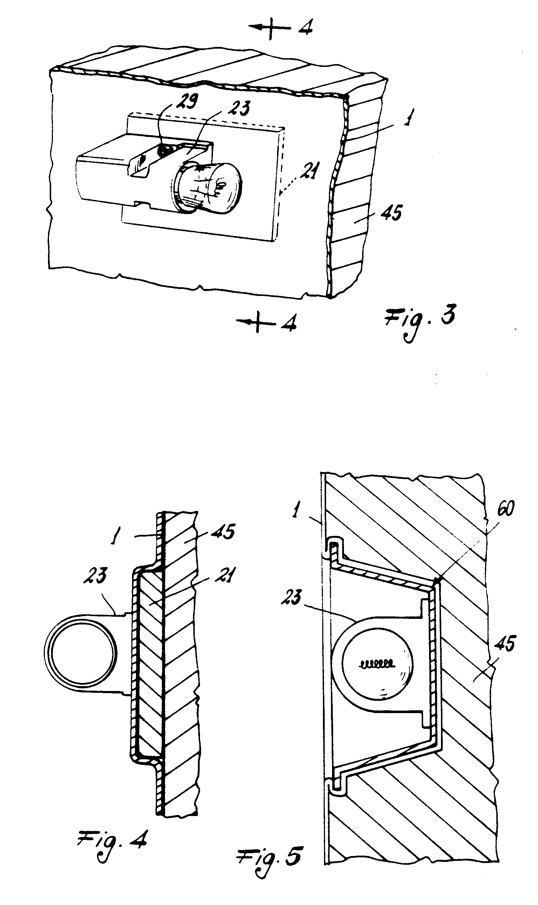

Figure 3 is a perspective view of a part of the refrigerator cabinet of Figure 1;
Figure 4 is a section on the line 4-4 of Figure 3; and
Figure 5 is a sectional view similar to that of Figure 4 but of a different embodiment of the invention.

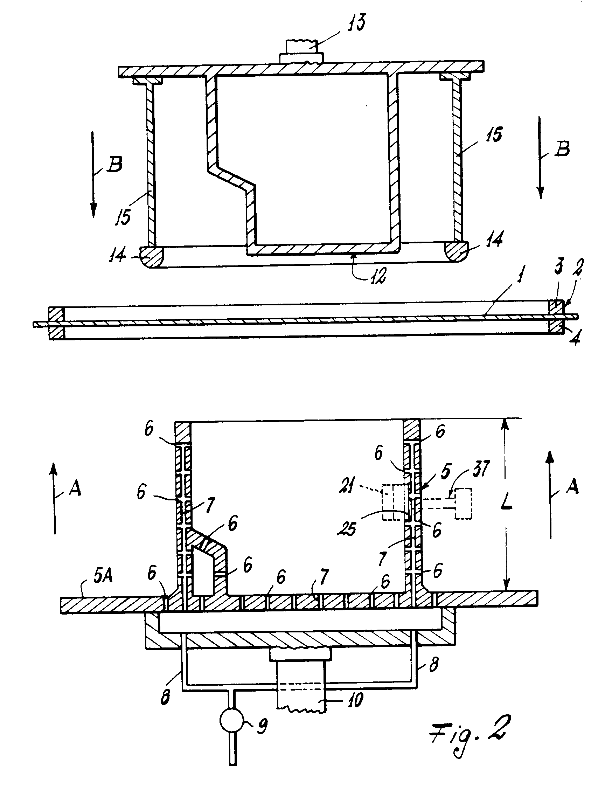

With reference to the figures and in particular to Figure 2, a rectangular sheet 1 of a previously heated synthetic material (for example acrylonitrile-butadiene-styrene of 5 mm thickness) is to be formed by plastic deformation achieved by generating a pressure difference between opposing faces of the sheet. In the illustrated example, this forming is achieved by a usual vacuum forming method. The sheet 1 is clamped peripherally for this purpose in a usual framework 2 formed from two rectangular frames 3, 4 which can be moved towards and away from each other by conventional means, not shown.

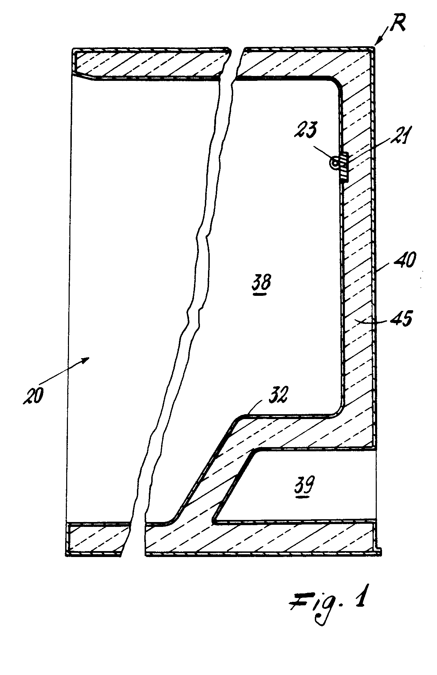

A mould 5 is positioned below the sheet 1 and a die 12 is positioned above the sheet coaxial to the mould 5. The mould 5 has the shape of the final product to be obtained from the sheet 1, ie the refrigerator cabinet defined by the internal part 20 of the refrigerator R of Figure 1. As can be seen in Figure 2, that surface of the mould facing the sheet 1 comprises apertures connected by suitable ducts 7, 8 to a vacuum source (not shown) via a shut-off valve.

The mould 5 is carried by a shaft 10 which is driven by usual motor means, not shown, in the direction of the arrows A.

The die 12 has a shape conjugate to the interior of the mould 5, but such as to leave a free space between the two conjugate surfaces when the die 12 has been inserted completely into the mould 5. The minimum distance between the conjugate surfaces of the mould 5 and die 12 is greater than the thickness of the sheet 1. The die 12 is carried by a shaft 13 which is driven by motor means, not shown, in the direction of the arrows B.

The die 12 is completed by a gasket 14 in the shape of a rectangular ring carried by suitable supports 15, as shown in Figure 2.

To secure a functional member such as a support plate 21 for a usual lampholder 23 during the forming of the cabinet, the mould 5 is provided in a suitable position with a seat 25 to hold the plate 21 during the forming operation. The member 21 is kept centered in the seat 25 by suitable diametrically opposing supports. The seat is located in a position corresponding to that in which the functional member or plate 21 is to lie in the cabinet, ie corresponding to that in which the lampholder 23 is to be positioned on the part 20 of the refrigerator.

Suitable pusher members 37 (shown schematically in Figure 2) release the plate 21 after it has been incorporated into the sheet 1.

In implementing the method of the invention, the plate 21 is firstly arranged in the seat 25. The size of this seat is advantageously such as to retain the plate without this latter needing to be fixed to the mould 5.

In particular, the seat 25 can be provided in a removable portion of the mould 5. In this manner, said removable portion can be replaced by an analogous portion having a seat 25 of different shape, depending on the functional member to be associated with the sheet 1 or refrigerator cabinet.

After the member or plate 21 has been placed in the seat 25, the sheet 1 is formed in known manner. This forming comprises various stages, namely:
a) heating the sheet to a suitable temperature (60°C);
b) lowering the die 12 until the distance between its lower edge and the upper face of the still undeformed sheet 1 is about one half (L/2) of the height L of the mould 5; simultaneously (or subsequently) the mould 5 is raised to engage the lower surface of the sheet 1 and substantially stretch only its peripheral part, to hence deform the sheet 1 upwards by an amount not exceeding L/2.
The valve 9 is kept closed;
c) maintaining the mould 5 and die 12 in their attained positions to allow the material of the sheet 1 sufficient time to adapt itself and prevent excessive thinning of critical regions;
d) lowering the die 12 to stretch the sheet 1;
e) maintaining the assembly in position for the same reasons as in stage c);
f) lowering the die 12 to its end-of-travel position to leave between it and the surface of the mould 5 a space greater than the thickness of the sheet. At the same time the gasket 14 presses the sheet 1 against the part 5A of the mould 5, to form a seal.
At this point the valve 9 is opened. Because of the effect of the vacuum, that part of the sheet 1 within the rectangular ring 14 adheres perfectly to the mould 5.

This causes the sheet 1 to adhere to the plate 21 positioned in the seat 25 of the mould 5 and to incorporate this plate into said sheet. When the now formed sheet 1 cools, the member or plate 21 remains securely fixed to the sheet, or rather incorporated into the sheet.

After the sheet 1 has cooled, the lampholder 23 is fixed in known manner (eg. by screws 29) to the plate 21 incorporated into the sheet.

Finally, the pusher members 37 expel the plate 21 from the seat 25 to enable the sheet 1 to be extracted from the mould.

One embodiment of the method according to the invention has been described. However, further embodiments are possible, such as those in which the functional member 21 is positioned in another part of the mould 5 or on the die 12.

Vacuum-forming of the sheet 1 has been described, ie generating a vacuum on one face of the sheet and maintaining the opposing face at atmospheric pressure.

However, the forming can also be achieved by plastic deformation of a previously heated sheet on one face of which a pressure greater than atmospheric acts, while atmospheric pressure acts on the opposite face, this face cooperating with the functional member to be fixed to the cabinet. The pressure urges the synthetic material sheet (within a suitable known mould) into cooperation with said member previously positioned in a suitable seat in the mould and maintained in position by centering members.

With the described method a cabinet R is obtained represented by the part 20 (obtained by forming the sheet 1) which defines a food preservation compartment 38. The part 20 is associated with a rear panel 40 prepared separately by vacuum forming in known manner starting with a sheet of synthetic material. The rear panel 40 closes the rear of the refrigerator cabinet. This rear panel comprises a compartment 39 which houses the compressor and lies below and at a suitable distance from a step 32 in the part 20 when the rear panel is mounted. Before mounting the rear panel 40, known inserts required for making the various connections, for example for the support feet, hinges etc, are placed in a suitable position in the cabinet.

After mounting the rear panel, it is fixed to the cabinet in known manner.

After this, using known methods, a usual polyurethane composition 45 is injected through pluggable apertures in the rear panel 40 to form the expanded thermal insulation in situ, ie within the empty spaces of the cabinet.

Figure 5 shows a further embodiment of the invention. In this figure, parts corresponding to those of the preceding figures are indicated by the same reference numerals.

The only difference between the figure under examination and the described Figure 4 is that the plate 21 is replaced by a recessed member 60 which when the refrigerator has been assembled is present in the surface of the sheet 1.

The method of the invention is in this case implemented as already described except that the member 16 is arranged on the die 12 before the forming and is temporarily fixed to the die during the forming operation.

A seat having a shape corresponding to that of the member 60 (and replacing the previously described seat 25) is provided in the mould 5 to allow the sheet 1 to move during its engagement with said member and the incorporating (partial in this case) of the member into said sheet.

With the method of the invention a refrigerator cabinet is obtained in which the support members for lampholders, thermostats or any known functional member are associated with the cabinet in a simple and reliable manner.

These members are not exposed to view and are not subjected to the moisture or frost formation usually occurring in the refrigerator.

## Claims

1. A method for forming cabinets and in particular refrigerator cabinets by plastic deformation, over moulds, of synthetic material sheets made plastic by heat action, said deformation being achieved by generating a pressure difference between the opposing faces of said sheets, characterised in that a usual support member (21) for lamps, thermostats or a general functional member of the refrigerator is previously associated with at least one part of the usual equipment which effects this forming, the forming then being carried out such as to incorporate said member (21) into the thus formed sheet, with its resultant securing to the sheet, ie to the cabinet wall which this latter defines.

2. A method as claimed in claim 1, characterised in that the functional member (21) is associated with the mould (5) of the equipment used for forming the synthetic material sheet.

3. A method as claimed in claim 1, characterised in that the functional member (21) is associated with the die (12) of the equipment used for forming the synthetic material sheet.

4. A method as claimed in claim 1, characterised by consisting of:
a) associating the functional member (21) with part of the forming equipment in a suitable position such that once associated with the formed sheet (1), said member lies in the desired position within the refrigerator cabinet;
b) heating the formable sheet;
c) raising the mould positioned below the sheet to hence stretch the peripheral part of the sheet so that its central part deforms upwards;
d) allowing the mould to remain in the final position of stage b) for a certain period;
e) lowering a die, positioned above the sheet, to hence stretch substantially only its central part so that this central part deforms downwards;
f) allowing the die to remain in the final position of stage d) for a certain period;
g) completing the descent of the die into the mould, to hence further stretch the central part of the sheet;
h) completing the forming of the sheet by the action of vacuum, which causes the sheet to adhere completely to the mould (5) and to the functional member (21) carried by this latter, said functional member becoming incorporated into said sheet during its cooling, and remaining securely fixed to it.

5. A cabinet or the like, in particular a refrigerator cabinet, formed by the method claimed in one or more of the preceding claims, the cabinet comprising an inner part (20) defining an internal compartment (38), and an outer rear panel (40), insulation material (45) being present between said part (20) and the rear panel (40), characterised by comprising, incorporated into at least one of said part (20) and said rear panel (40), at least one functional member (21) of the refrigerator (R) such as a support member for lamps, thermostat or the like.
